# EUROPÄISCHE PATENTSCHRIFT

(11) **EP 2 645 630 B1**
(45) Veröffentlichungstag und Bekanntmachung des Hinweises auf die Patenterteilung: **27.06.2018**
(21) Anmeldenummer: 13157191.1
(22) Anmeldetag: 28.02.2013
(51) Int. Cl.: H04L 12/24

(54) **Adaptives Remote-Service-Protokoll**
Adaptive remote service protocol
Protocole de service à distance adaptatif

(30) Priorität: 27.03.2012 DE 102012006046
(43) Veröffentlichungstag der Anmeldung: 02.10.2013
(73) Patentinhaber: Heidelberger Druckmaschinen AG, 69115 Heidelberg (DE)
(72) Erfinder: Oelsner, Tom, 64390 Erzhausen (DE); Hohl, Andreas, 69124 Heidelberg (DE); Reinhard, Mark, 69115 Heidelberg (DE)

(56) Entgegenhaltungen:
- WO-A1-00/76228
- WO-A2-01/60010
- US-A1- 2003 028 895
- US-B1- 7 502 752

## Beschreibung

Die vorliegende Erfindung betrifft ein Verfahren zur Fernwartung von Geräten mit einem Rechner mittels eines Fernwartungsrechners, wobei wenigstens ein Protokoll zum Austausch von Daten zwischen dem Rechner und dem Fernwartungsrechner genutzt wird.

Inzwischen werden viele Maschinen und Geräte über ein Fernwartungssystem gewartet. Dabei sind die Geräte und Maschinen wie z. B. Druckmaschinen mit einem Rechner ausgestattet, welcher üblicherweise über ein Netzwerk wie das Internet eine Datenverbindung zu einem Fernwartungsrechner aufbauen kann. Der Fernwartungsrechner steht beim Hersteller der Maschine oder bei einem entsprechenden Service- und Wartungsbetrieb. Auf diese Art und Weise ist es möglich, Betriebsdaten der Maschine über den Rechner der Maschine und das Internet zum Fernwartungsrechner zu übertragen, so dass dort Servicepersonal Wartungsvorgänge in der Maschine auslösen kann. Dazu werden die Betriebsdaten der Maschine vom Rechner erfasst und dann über das Internet an den Fernwartungsrechner übertragen. Auf dem gleichen Weg ist auch eine Übertragung von Daten vom Fernwartungsrechner über das Internet zu dem Rechner der Maschine möglich, um Wartungs- und Servicevorgänge an der Maschine vorzunehmen.

Das Erfassen von Betriebszustandsdaten einer Maschine geht aus dem Patent US 7,287,473 B2 hervor. Dieses Patent beschreibt eine Möglichkeit, wie die Betriebsdaten einer Maschine erfasst werden können, um diese für unterschiedliche Zwecke nutzen zu können. Ein Zweck kann die Nutzung für Servicevorgänge sein.

Aus dem Patent US 7,328,347 B2 geht ein Verfahren zur Fernwartung hervor, bei dem über einen Fernwartungsrechner eine Maschine bedient werden kann. Dabei wird sichergestellt, dass von dem Fernwartungsrechner nur solche Vorgänge ausgelöst werden können, welche Personen an der Maschine nicht gefährden. Auf diese Art und Weise wird eine sichere Fernwartung ermöglicht, ohne Bedienpersonal zu gefährden.

Die Offenlegungsschrift WO 00/76228 beschreibt ein Netzwerk- Element, das zur Abstimmung mehrerer Management-Protokolle dient. Hierzu umfasst dieses Netzwerk-Element ein erstes Subsystem, ein zweites Subsystem und eine allgemeine "Management Information Base" (MIB). Das erste Subsystem ist in der Lage Übertragungen in Form eines ersten Protokolls zu empfangen und diese in ein allgemeines Protokoll zu übersetzen. Das zweite Subsystem ist in der Lage Übertragungen in Form eines zweiten Protokolls zu empfangen und dieses ebenfalls in das allgemeine Protokoll zu übersetzen. Die MIB enthält einen Datensatz und ein allgemeines Interface für diesen Datensatz. Das allgemeine Interface kann auf diesen Datensatz zugreifen, um Übertragungen, die es von dem ersten Subsystem und dem zweiten Subsystem erhält, in dem allgemeinen Management-Protokoll zu verarbeiten. Somit wird hierbei eine Kommunikation zwischen zwei Systemen ermöglicht, die auf Basis eines jeweils anderen Protokolls arbeiten.

Aus der Offenlegung US 2003/0028895 A1 geht ein System bezüglich der Anordnung von Video-Netzwerk Geräten hervor. Hierbei wird der Zugang zu Geräten mit unterschiedlichen nativen Protokollen von einer Video-Netzwerk Plattform aus ermöglicht, die ein definiertes Protokollformat, welches einfach für ein Benutzer-Interface zugänglich ist, nutzt. Auch in dieser Erfindung werden von einem Adapter Informationen, die über das Netzwerk an die angeschlossenen Geräte übermittelt werden in das jeweilige native Format des Gerätes übersetzt.

Die Offenlegungsschrift WO 01/60010 A2 zeigt ein System zur Vermittlung zwischen Management-Protokollen zwischen zwei drahtlosen Netzwerken. Hierbei wird ein erstes drahtloses Netzwerk umfasst, welches an Hand eines drahtlosen Interfaces mit einem mobilen Gerät kommunizieren kann. Weiterhin ist ein zweites Netzwerk umfasst, welches mit dem ersten Netzwerk verbunden ist und ein "operations and maintenance center (OMC)" umfasst. Das OMC kann hierbei in Form eines ersten Protokolls Anwendungen zur Verwaltung des ersten Netzwerkes durchführen. An Hand eines zweiten Protokolls kann das OMC auch Anwendungen zur Verwaltung des zweiten Netzwerks durchführen.
Darüber hinaus umfasst das System einen "Protokoll Vermittler", der an beide Netzwerke angeschlossen ist und die ersten und zweiten Protokolle jeweils übersetzen kann.

Das Patent US 7,502,752 beinhaltet ein System, welches es ermöglicht Finanzdienstleistungen auf dezentralen Geräten anzubieten und durchzuführen. Auf dem dezentralen Gerät können Kunden oder Angestellte der Finanzinstitution verschiedene Klein-Anwendungen auswählen um eine konkrete Funktion auszuführen. Das dezentrale Gerät kann dabei in einer beliebigen Form wie etwa einem PC, einem Telefon mit Bildschirm, einem Geldautomaten, einem Personal Data Assistant (PDA), oder einem internen Angestellten Terminal vorliegen und auf verschiedene Art und Weise wie z.B. über das Internet oder einen externen Service Provider auf das System zugreifen. Dabei beinhaltet das System eine einzige Plattform um sich mit allen Arten von dezentralen Geräten zu verbinden. Das Problem dabei ist, dass die vielen verschiedenen Geräte auch auf Basis zahlreicher unterschiedlicher Protokolle arbeiten. Dieses Problem wird durch einen sogenannten "management protocol agent" gelöst, der die Protokollsprache des Systems in die unterschiedlichen Protokolle der dezentralen Geräte übersetzt. Bei der Fernwartung wird üblicherweise ein Protokoll verwendet, welches den Datenaustausch zwischen dem Rechner des Geräts und dem Fernwartungsrechner ermöglicht. Dieses Protokoll ist heute statisch festgelegt. Das Protokoll ist für die zum Auslieferungszeitpunkt der Maschine bekannten Serviceprozesse ausgelegt. Da der Lebenszyklus insbesondere von Druckmaschinen sehr groß ist, gelangt ein bereits ausgeliefertes Protokoll häufig schon nach kurzer Zeit an seine Grenzen, wenn neue Service- und Wartungsdienstleistungen über das alte installierte Protokoll abgewickelt werden sollen. Insbesondere wenn eine neuartige Kommunikation zwischen dem Rechner der Maschine und dem Fernwartungsrechner erfolgen soll, treten derzeit etliche Probleme auf, wenn versucht wird diese neuartige Kommunikation im bestehenden Protokoll abzubilden. Alternativ kann auch die gesamte Software im Maschinenrechner einem Update unterzogen werden. Dies führt jedoch zu einem großen Aufwand, da ein Softwareupdate umfangreichen Tests unterzogen werden muss, um sicherzustellen, dass der Rechner der Maschine noch weiterhin korrekt funktioniert. Des Weiteren ist ein Softwareupdate sehr zeitaufwendig, da eine große Datenmenge auf den Maschinenrechner übertragen werden muss. Ein häufiges Update für Software des Maschinenrechners ist daher nicht möglich, was entsprechend lange Zyklen zur Folge hat.

Es ist Aufgabe der vorliegenden Erfindung, diese Nachteile des Standes der Technik zu beseitigen.

Die Aufgabe wird erfindungsgemäß durch Patentanspruch 1 gelöst. Vorteilhafte Ausgestaltungen der Erfindung sind den Unteransprüchen und den Zeichnungen zu entnehmen. Das erfindungsgemäße Verfahren zur Fernwartung von Geräten funktioniert prinzipiell mit derselben Hardware wie bisherige Verfahren zur Fernwartung. Auch hier weist das Gerät wie z. B. eine Druckmaschine üblicherweise einen Rechner auf, welcher direkt oder indirekt über ein Netzwerk und das Internet mit einem Fernwartungsrechner verbunden ist. Der Datenaustausch zwischen dem Rechner des Geräts und dem Fernwartungsrechner erfolgt prinzipiell nach einem Protokoll, welches bei Auslieferung des Geräts auf dem Rechner vorhanden ist. Gemäß der vorliegenden Erfindung können jedoch neue Service- und Wartungsfunktionalitäten und insbesondere eine neuartige Kommunikation zwischen dem Rechner des Geräts und dem Fernwartungsrechner leicht und jederzeit nachgerüstet werden. Dazu ist erfindungsgemäß vorgesehen, dass das Protokoll zum Austausch von Daten zwischen dem Rechner und dem Fernwartungsrechner vor einem Vorgang zur Datenübertragung angepasst werden kann. Wenn also eine neuartige Kommunikation oder ein neues Service- oder Wartungsverfahren bei der Fernwartung des Geräts verwendet werden soll, welches mit dem bisherigen Protokoll nicht möglich ist, so wird zunächst das Protokoll zum Austausch von Daten zwischen dem Rechner und dem Fernwartungsrechner angepasst.

Die Anpassung des Protokolls erfolgt dabei vorzugsweise durch eine Protokollanpassungsebene auf dem Fernwartungsrechner. Dies hat den Vorteil, dass der Bediener des Geräts mit der Anpassung des Protokolls nichts zu tun hat, da die Anpassung des Protokolls ausschließlich durch den Fernwartungsrechner und den Rechner erfolgt. Auf diese Art und Weise ist es möglich, zusätzliche Protokolle einfach ohne Mitwirkung des Bedieners des Geräts jederzeit nachzurüsten. Die Protokollanpassungsebene ist eine Software, welche den Datenaustausch einleitet und dabei an Hand der gewünschten Anwendung die vorhandenen Protokolle auf Kompatibiliät mit der gewünschten Anwendung überprüft und ein passendes Protokoll auswählt und falls erforderlich installiert.

Des Weiteren ist vorgesehen, dass das standardmäßig vorgesehene Protokoll ein Protokoll zum Austausch kleiner Dateneinheiten und kleiner Datenmengen ist. Ein derartiges Protokoll wird auch als leichtgewichtiges Protokoll bezeichnet, da es nur einen geringen Datenverkehr zwischen dem Fernwartungsrechner und dem Rechner des Geräts verursacht. Durch die Begrenzung auf geringe Datenmengen werden die Ruhelast und der dadurch bedingte Datenverkehr gering gehalten. Ein Beispiel für ein leichtgewichtiges Protokoll ist "Instant Messaging". Ein derartiges Protokoll reicht auch aus, um festzustellen, ob das Gerät noch im Betrieb ist und korrekt funktioniert. Auch das Beobachten der Maschine durch den Fernwartungsrechner ist damit bereits möglich. Mit diesem leichtgewichtigen Protokoll ist es möglich, eine große Anzahl von Geräten problemlos mit dem Fernwartungsrechner zu verbinden, so dass der Fernwartungsrechner auch mehr als eine Million Geräte problemlos betreuen kann.

In einer vorteilhaften Ausgestaltung der Erfindung ist vorgesehen, dass im Bedarfsfall zum Austausch großer Datenmengen ein Protokoll zum Austausch großer Datenmengen vom Fernwartungsrechner auf den Rechner des Geräts geladen wird. Wenn eine große Datenmenge vom Fernwartungsrechner über das Internet zu dem Rechner des Geräts übertragen werden soll, so ist dies mit dem standardmäßig vorgesehenen Protokoll nicht oder nur mit hohem Aufwand möglich. Um dennoch den Datenaustausch zu ermöglichen, wird nun erfindungsgemäß ein Protokoll vom Fernwartungsrechner auf den Rechner des Geräts geladen, um so den Austausch großer Datenmengen zu ermöglichen. Damit kann jederzeit problemlos eine große Menge Daten ausgetauscht werden, indem einfach das Protokoll entsprechend kurzfristig nachgerüstet wird.

Erfindungsgemäß ist vorgesehen, dass vor der Installation und Übertragung eines neuen Protokolls der Fernwartungsrechner das Protokoll des Rechners des Geräts auf Eignung für die Übertragungscharakteristik überprüft. Auf diese Art und Weise wird zunächst geprüft, ob der vorgesehene Vorgang zur Datenübertragung bzw. Servicevorgang, d.h. die Anwendung, mit dem bisherigen auf dem Rechner des Geräts installierten Protokoll möglich ist. Wenn der Fernwartungsrechner feststellt, dass dies möglich ist, wird kein neues Protokoll auf dem Rechner des Geräts installiert. Wenn der Fernwartungsrechner jedoch feststellt, dass ein neues Protokoll benötigt wird, so kann der Fernwartungsrechner nach der erfolgten Überprüfung das passende Protokoll aufnehmen und über das Internet an den Rechner des Geräts übertragen. Wenn auf dem Rechner des Geräts bereits mehrere Protokolle vorhanden sind, so werden diese Protokolle alle auf Eignung mit dem nächsten Vorgang zur Datenübertragung überprüft. Auf diese Art und Weise kann das passende Protokoll auf dem Gerät ausgewählt werden, ohne dass ein neues Protokoll übertragen werden muss. Erst wenn keines der auf dem Rechner des Geräts vorhandenen Protokolle für den anstehenden Vorgang zur Datenübertragung geeignet ist, wird ein neues Protokoll von dem Fernwartungsrechner auf dem Rechner des Geräts installiert. Dazu wählt der Fernwartungsrechner das für den anstehenden Vorgang zur Datenübertragung passende Protokoll aus und versendet es über das Internet an den Rechner des Geräts, wo das Protokoll installiert wird. Danach kann das neue Protokoll auf dem Rechner des Geräts für den anstehenden Vorgang zur Datenübertragung, die Anwendung, benutzt werden.

In einer weiteren Ausgestaltung der Erfindung ist vorgesehen, dass der Fernwartungsrechner oder der Rechner des Geräts ein oder mehrere auf dem Rechner des Geräts abgelegte Protokolle löscht. Wenn z. B. die Übertragung großer Datenmengen über ein zusätzlich installiertes Protokoll abgeschlossen ist, so wird dieses zusätzliche Protokoll häufig für einen längeren Zeitraum nicht mehr benötigt, da die reine Beobachtung des Geräts durch den Fernwartungsrechner mit dem leichtgewichtigen Standardprotokoll erfolgen kann. In diesem Fall ist es möglich, dass der Fernwartungsrechner oder der Rechner des Geräts die für den Standardwartungsvorgang nicht benötigten Protokolle löscht, um Platz für neue Protokolle zu schaffen.

Vorteilhafterweise ist vorgesehen, dass das Protokoll Funktionen eines VPN-Übertragungsmoduls, eines Dateiübertragungsmoduls für große Dateien oder eines speziellen Audio-/Video-Protokolls zur Übertragung von Audio- und Videodaten aufweisen. Auf diese Art und Weise ist es möglich, über das VPN-Übertragungsmodul einen verschlüsselten und sicheren Datenübertragungsweg zwischen dem Rechner des Geräts und dem Fernwartungsrechner sicherzustellen, um zu verhindern, dass von außen auf die übertragenen Daten zugegriffen werden kann. Mit dem Modul zur Übertragung größerer Dateien können insbesondere Softwarebausteine nachgerüstet werden. Das Audio-Video-Modul bietet die Möglichkeit, dass das Wartungspersonal vor dem Fernwartungsrechner über das Internet mit dem Bediener des Geräts akustisch und visuell in Kontakt treten kann und so den Wartungsvorgang steuern und begleiten kann. Je nachdem, welche Funktion für den anstehenden Wartungsvorgang benötigt werden, kann das passende Protokoll vom Fernwartungsrechner auf den Rechner des Geräts übertragen und für den anstehenden Wartungsvorgang verwendet werden.

Die vorliegende Erfindung eignet sich insbesondere zur Wartung von Druckmaschinen. Druckmaschinen werden meist über einen langen Zeitraum genutzt und außerdem häufig nachträglich mit neuen Peripheriegeräten nachgerüstet. Diese neuen Peripheriegeräte enthalten entsprechende Zusatzfunktionen, welche bei Auslieferung der Druckmaschine nicht bekannt waren. Mit der vorliegenden Erfindung ist es nun möglich, auch diese zusätzlichen Peripheriegeräte problemlos zu warten, indem das Protokoll des Rechners der Maschine entsprechend nachgerüstet werden kann, um zusätzliche Wartungsfunktionalitäten zu ermöglichen.

Die vorliegende Erfindung wird nachfolgend anhand zweier Figuren näher beschrieben und erläutert. Es zeigen:
- Figur 1: ein System zur Fernwartung zur Durchführung des erfindungsgemäßen Verfahrens und
- Figur 2: den Einsatz unterschiedlicher Protokolle bei der Fernwartung,
- Figur 3: zeigt eine Ansicht der am Datenaustausch beteiligten Softwarekomponenten.

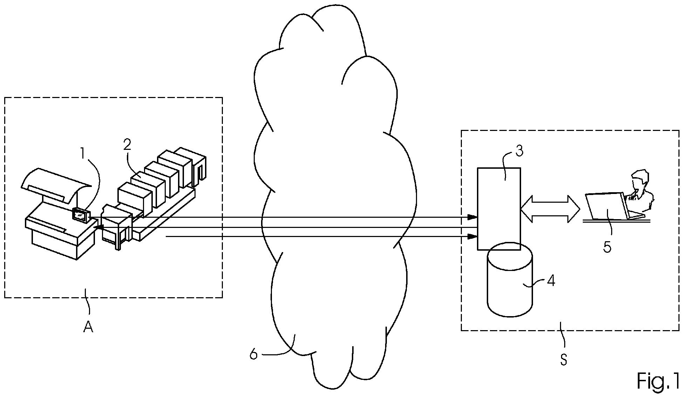

Figur 1 zeigt den Aufbau eines Systems zur Fernwartung. Beispielhaft wird in Figur 1 eine Druckmaschine 2 und in einer Druckerei A gewartet. Die Druckmaschine 2 weist einen Druckmaschinenrechner 1 auf, welcher dazu dient, die Druckmaschine 2 zu steuern und außerdem eine Schnittstelle zum Internet 6 aufweist. Zudem übernimmt der Druckmaschinenrechner 1 Funktionen der Fernwartung, indem er z. B. die Betriebsdaten der Druckmaschine 2 über Sensoren in der Druckmaschine 2 erfasst und im Rechner 1 abspeichert. Auf diese Art und Weise kann der aktuelle Zustand der Druckmaschine 2 im Rechner 1 protokolliert werden und die Ergebnisse für Wartungsvorgänge genutzt werden. Die so im Rechner 1 abgespeicherten Daten können über das Internet 6 an einen Fernwartungsrechner 3 übertragen werden. Ebenso können auf umgekehrtem Weg vom Fernwartungsrechner 3 über das Internet 6 Daten an den Rechner 1 der Druckmaschine 2 übertragen werden. Der Fernwartungsrechner 3 befindet sich bei einem Serviceprovider S, welcher Service- und Wartungsdienstleistungen rund um die Druckmaschine 2 bereitstellt. Dazu ist beim Serviceprovider S Service- und Wartungspersonal vorhanden, welches die eingehenden Betriebsdaten der Druckmaschine 2 auswertet. Dazu arbeitet das Servicepersonal an einem Servicelaptop 5, welcher wiederum mit dem Fernwartungsrechner 3 verbunden ist. Der Fernwartungsrechner 3 ist außerdem mit einer Datenbank 4 verbunden, wo Programme und Protokolle und Software abgelegt sind.

Standardmäßig wird bei der Datenübertragung zwischen dem Fernwartungsrechner 3 und dem Druckmaschinenrechner 1 über das Internet 6 ein sogenanntes leichtgewichtiges Protokoll a verwendet. Ein derartiges leichtgewichtiges Protokoll a ist ausschließlich auf den Austausch kleiner Dateneinheiten ausgelegt. Dies reicht aus, um das Beobachten der Druckmaschine 2 durchführen zu können. Da nur kleine Datenmengen über das Internet 6 übertragen werden müssen, kann die Ruhelast gering gehalten werden. Ein derartiges leichtgewichtiges Protokoll a ist z. B. "Instant Messaging". In diesem Protokoll a kann überprüft werden, ob die Druckmaschine 2 in Betrieb ist und die Druckmaschine 2 kann überwacht werden. Diese Basisfunktionen reichen somit für die Überwachung der Druckmaschine 2 zunächst aus. Da die Ruhelast gering ist und wenige Daten zwischen dem Rechner 1 der Druckmaschine 2 und dem Fernwartungsrechner 3 übertragen werden, kann eine große Anzahl von Druckmaschinen 2 durch den Fernwartungsrechner 3 betreut werden. Über eine Million Geräte und Maschinen können so verwaltet werden.

Wenn das Servicepersonal vor dem Servicelaptop 5 jedoch Femwartungsvorgänge durchführen will, welche mit dem Standardprotokoll a nicht möglich sind, so muss das Protokoll auf dem Rechner 1 angepasst werden. In diesem Fall fragt der Fernwartungsrechner 3 über das Internet 6 auf dem Rechner 1 ab, welche Möglichkeiten die auf dem Rechner 1 installierten Protokolle bieten. Wenn das benötigte Protokoll dort schon installiert ist, so kann der Fernwartungsrechner 3 dieses Protokoll auswählen und den Vorgang zur Datenübertragung starten. Nach Abschluss des Vorgangs zur Datenübertragung wird dieses Protokoll wieder geschlossen. Damit wird sichergestellt, dass die Ruhelast gering bleibt und permanent wenig Daten übertragen werden.

Wenn jedoch das passende Protokoll auf dem Rechner 1 nicht vorhanden ist, so kann der Fernwartungsrechner 3 das passende Protokoll über das Internet 6 auf den Rechner 1 der Druckmaschine 2 laden und so nachträglich zur Verfügung stellen. Bei diesem Vorgang wird das passende Protokoll zunächst aus der Datenbank 4 auf den Fernwartungsrechner 3 übertragen und von dort über das Internet 6 auf den Rechner 1 der Druckmaschine 2 übertragen. Wenn der Vorgang zur Datenübertragung abgeschlossen ist, ist es möglich, das zusätzliche Protokoll auf dem Rechner 1 der Maschine 2 zu belassen. Es ist jedoch auch möglich, das zusätzliche Protokoll nach der Datenübertragung wieder zu löschen.

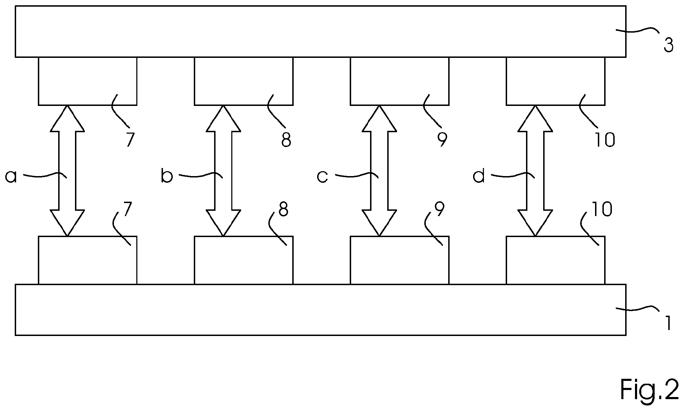

In Figur 2 sind mehrere unterschiedliche Protokolle aufgeführt. Wie bereits ausgeführt wurde, ist standardmäßig ein leichtgewichtiges Protokoll a installiert, welches den ständigen Datenaustausch zwischen dem Rechner 1 und dem Fernwartungsrechner 3 ermöglicht. Dieser Datenaustausch wird sowohl auf dem Fernwartungsrechner als auch auf dem Rechner 1 der Maschine 2 über Module 7 zur Befehlsübermittlung gesteuert. Das leichtgewichtige Protokoll a ist ständig in Betrieb und erlaubt so eine permanente Datenübertragung von geringen Datenmengen zwischen dem Rechner 1 und dem Fernwartungsrechner 3. Auf diese Art und Weise können insbesondere Kurznachrichten und kleine Dateien übertragen werden.

Neben dem Standardprotokoll a können bei Bedarf weitere Protokolle b, c, d vom Fernwartungsrechner 3 auf den Rechner 1 der Maschine übertragen werden. So ist z. B. der Einsatz eines VPN-Tunnels b möglich, welcher die sichere Datenübertragung zwischen dem Rechner 1 und dem Fernwartungsrechner 3 erlaubt. Dazu wird auf dem Rechner 1 ein entsprechendes VPN-Protokollmodul 8 installiert. Ebenso kann ein spezielles Protokoll c zur Übertragung großer Dateien verwendet werden, zu diesem Zweck wird dann ein Dateiübertragungsmodulprotokoll 9 auf dem Rechner 1 installiert. Als weiteres Beispiel in Figur 2 ist ein Protokoll d zur Übertragung von Audio-Video-Daten beschrieben, welches über ein Audio-Video-Modul 10 abgewickelt wird. Auch dieses Audio-Video-Modul 10 wird vom Fernwartungsrechner 3 über das Internet 6 auf den Rechner 1 übertragen und dort installiert. Mit dem Audio-/Video-Modul 10 können Audio- und Videokonferenzen zwischen dem Servicepersonal vor dem Servicelaptop 5 und dem Bediener der Druckmaschine 2 eingerichtet werden.

Wenn zusätzlich zu dem Standardprotokoll a ein optimiertes Protokoll b,c,d verwendet werden soll, so kann vorzugsweise zunächst ein Protokolltest durchgeführt werden. Mit diesem Test wird sichergestellt, dass das zusätzliche Protokoll b,c,d für den vorgesehenen Einsatzzweck auch funktioniert. Auf diese Art und Weise können Hindernisse wie z. B. temporäre Firewall-Einstellungen oder andere IT Sicherheitsmaßnahmen überprüft werden. Sollte der Test nicht erfolgreich sein, so muss die Kommunikation weiterhin mit dem Standardprotokoll a verlaufen. Andernfalls wird das zusätzliche Protokoll b,c,d verwendet.

Der Protokolltest kann in einer separaten Software integriert sein, welcher ebenfalls vom Fernwartungsrechner 3 auf das Gerät 1 übertragen wird. Selbstverständlich kann der Protokolltest aber auch schon in das Standardprotokoll a integriert werden. Des Weiteren kann vorgesehen sein, dass nach der Installierung eines zusätzlichen Protokolls, insbesondere des speziellen Protokolls zur Übertragung großer Dateien c, die Übertragung weiterer Protokolle b,d nicht auf Basis des Standardprotokolls a sondern auf Basis des optimierten Protokolls c erfolgt. Dies sorgt dafür, dass die Übertragung zusätzlicher Protokolle und die Installation der zusätzlichen Protokolle aufgrund der höheren Geschwindigkeit des speziellen Protokolls c zur Übertragung großer Dateien beschleunigt werden kann.

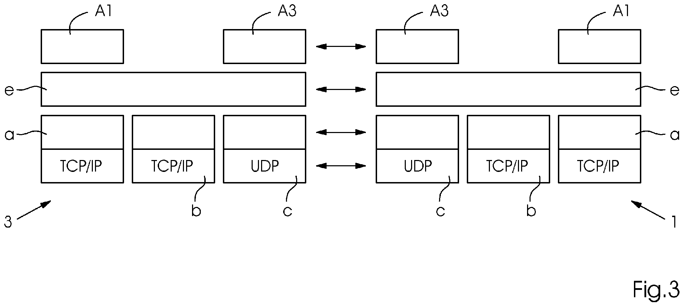

In Figur 3 ist die aus Figur 2 bekannte Kommunikationsstruktur feiner aufgelöst dargestellt. Prinzipiell muss bei der Datenübertragung im Internet 6 ein Protokoll verwendet werden, da so ein Datenaustausch überhaupt erst möglich ist. Bei vielen Datenübertragungen im Internet 6 ist dies standardmäßig das Protokoll TCP/IP. Dieses Protokoll stellt praktisch die unterste Lage beim Datenaustausch über das Internet dar und wird in den meisten Fällen verwendet. Dieses Standardprotokoll TCP/IP wird daher auch bei dem standardmäßig vorgesehenen Protokoll a für den Datenaustausch verwendet. Dieses Standardprotokoll wird bei einer ersten Anwendung A1 verwendet, welche den ständigen Kontakt zwischen dem Fernwartungsrechner 3 und dem Maschinenrechner 1 ermöglicht. Folglich ist auf beiden Rechners 1, 3 jeweils das Standardprotokoll a installiert, welches TCP/IP zur Datenübertragung verwendet.

Dazwischen gibt es erfindungsgemäß eine zusätzliche Ebene e, welche die Anpassung des Protokolls vornimmt, wenn das Protokoll a nicht ausreicht. Die Protokollanpassungsebene e ist eine Software ähnlich einem Protokoll und steuert die Verwendung des geeigneten Protokolls a,b,c,d. So kann in einem Anwendungsfall A3, wenn große Datenmengen übertragen werden sollen, dies nicht mit dem Standardprotokoll a via TCP/IP vorgenommen werden. Zu diesem Zweck entscheidet dann die Protokollanpassungsebene e, wie weiter verfahren werden soll. Wenn die Ebene e auf dem Verwaltungsrechner 3 feststellt, dass auf dem Maschinenrechner 1 das zur Anwendung A3 passende Protokoll bereits installiert ist, so wird dieses Protokoll c zum Austausch großer Datenmengen nach dem Standard UDP verwendet. Sollte das Protokoll c jedoch nicht auf dem Maschinenrechner 1 installiert sein, so bewirkt die Anpassungsebene e zunächst die Übertragung des Protokolls c auf den Maschinenrechner 1 und die dortige Installation. Danach steht dann das Protokoll c für den Austausch großer Datenmengen zur Verfügung und der Datenaustausch großer Datenmengen zu dem Fernwartungsrechner 3 und dem Maschinenrechner 1 kann von statten gehen.

Genauso kann der Fernwartungsrechner 3 bei Verwendung des VPN Tunnels nach dem Protokoll b vorgehen, das wäre dann die zweite Anwendung. Entscheidend dabei ist, dass mittels der Protokollanpassungsebene e auf dem Fernwartungsrechner 3 die Anpassung des Protokolls auf dem Maschinenrechner 1 gesteuert werden kann. Das Herunterladen und installieren eines neuen Protokolls auf dem Maschinenrechner 1 erfolgt daher immer gesteuert vom Fernwartungsrechner 3, wobei das Protokoll an sich nicht zwangsläufig vom Fernwartungsrechner 3 heruntergeladen werden muss, sondern auch von einem anderen Rechner im Internet 6 kommen kann. Auf diese Art und Weise kann die Protokollanpassungsebene e je nach Anwendung A1, A3 jeweils das passende Protokoll b,c,d auf dem Maschinenrechner 1 aktivieren oder installieren.

Sollte aus irgendeinem Grund die Verbindung über ein neu installiertes Protokoll b, c,d fehlschlagen, so verwendet die Protokollanpassungsebene e wieder das Standardprotokoll a. Der Figur 3 ist zu entnehmen, dass das Protokoll a nicht mit der jeweiligen Anwendung a1 fest verbunden ist, sondern aus einem eigenen Softwaremodul besteht. Auf diese Art und Weise müssen Anwendungen A1, A3 nicht den entsprechenden Protokollen a, c fest zugeordnet sein, sondern die Protokollanpassungsebene e kann zunächst überprüfen, ob eine Anwendung A1, A3 nicht mit den bereits vorhandenen Protokollen durchgeführt werden kann. Erst wenn dies nicht der Fall ist, aktiviert oder installiert die Protokollanpassungsebene e auf dem Maschinenrechner 1 ein neues Protokoll b, c.

Die vorliegende Erfindung hat den großen Vorteil, dass optimierte Protokolle b,c,d für Anwendungsfälle bei Bedarf nachgeladen werden können, wobei Anwendung und Protokoll nicht fest verbunden sind, was die Flexibilität erhöht. Diese optimierten Protokolle bieten einen höheren Datendurchsatz und damit eine höhere Leistung sowie auch eine höhere Verfügbarkeit und Robustheit für den jeweiligen Anwendungsfall. Durch den modularen Ansatz und Aufbau der Protokolle können Protokolle b,c,d für neuartige Anwendungen auch noch nachträglich in einer bereits installierten Druckmaschine 2 eingesetzt werden.

### Bezugszeichenliste

- 1: Druckmaschinenrechner
- 2: Druckmaschine
- 3: Fernwartungsrechner
- 4: Datenbank
- 5: Service-Laptop
- 6: Internet
- 7: Modul zur Befehlsübermittlung
- 8: VPN Modul
- 9: Dateiübertragungsmodul
- 10: Audio-/Videomodul
- A: Druckerei
- S: Serviceprovider
- a: leichtgewichtiges zweiseitiges Protokoll
- b: VPN Tunnel im Bedarfsfall
- c: spezielles Protokoll zur Übertragung großer Dateien
- d: Protokoll zur Übertragung von Audio-/Videodaten
- e: Protokollanpassungsebene
- A1: erste Anwendung
- A3: dritte Anwendung

## Patentansprüche

1. Verfahren zur Fernwartung von Geräten (2) mit einem Rechner (1) mittels eines Fernwartungsrechners (3), wobei wenigstens ein Protokoll (a,b,c,d) zum Austausch von Daten zwischen dem Rechner (1) und dem Fernwartungsrechner (3) genutzt wird, bei welchem eine Protokollanpassungsebene (e) vorgesehen ist, welche das Protokoll (a,b,c,d) zum Austausch von Daten zwischen dem Rechner (1) und dem Fernwartungsrechner (3) vor einem Vorgang zur Datenübertragung auf Eignung mit dem Vorgang zur Datenübertragung überprüft **dadurch gekennzeichnet, dass** die Protokollanpassungsebene (e) das Protokoll falls erforderlich auf den Rechner (1) überträgt und dort installiert.

2. Verfahren nach Anspruch 1,
**dadurch gekennzeichnet,**
**dass** die Protokollanpassungebene (e) auf dem Fernwartungsrechner (3) und/oder dem Rechner (1) das Protokoll (a,b,c,d) anpasst.

3. Verfahren nach Anspruch 1 oder 2,
**dadurch gekennzeichnet,**
**dass** das standardmäßig vorgesehene Protokoll (a,b,c,d) das Standardprotokoll (a) TCP/IP ist.

4. Verfahren nach einem der vorhergehenden Ansprüche,
**dadurch gekennzeichnet,**
**dass** im Bedarfsfall zum Austausch großer Datenmengen ein Protokoll (c) nach dem UDP Standard vom Fernwartungsrechner (3) auf den Rechner (1) des Geräts (2) geladen wird.

5. Verfahren nach einem der vorhergehenden Ansprüche,
**dadurch gekennzeichnet,**
**dass** die Abfrage eine Überprüfung auf etwaige auf dem Rechner (1) des Geräts (2) vorhandene Protokolle (a,b,c,d) umfasst und dass von diesen vorhandenen Protokollen (a,b,c,d) das passende Protokoll (a,b,c,d) durch die Protokollanpassungsebene (e) auf dem Fernwartungsrechner (3) zur Datenübertragung ausgewählt wird.

6. Verfahren nach einem der vorhergehenden Ansprüche,
**dadurch gekennzeichnet,**
**dass**, wenn auf dem Rechner (1) des Geräts(2) kein passendes Protokoll (a,b,c,d) durch die Protokollanpassungsebene (e) auf dem Fernwartungsrechner (3) gefunden wird, vom Fernwartungsrechner (3) ein passendes Protokoll auf den Rechner (1) des Geräts (2) übertragen und für die Datenübertragung benutzt wird.

7. Verfahren nach einem der vorhergehenden Ansprüche,
**dadurch gekennzeichnet,**
**dass** die Protokollanpassungsebene (e) auf dem Fernwartungsrechner (3) oder dem Rechner (1) des Geräts (2) ein oder mehrere auf dem Rechner (1) des Geräts (2) abgelegte Protokolle (a,b,c,d) löscht.

8. Verfahren nach einem der vorhergehenden Ansprüche,
**dadurch gekennzeichnet,**
**dass** das Protokoll (a,b,c,d) Funktionen eines VPN Übertragungsmoduls, eines Dateiübertragungsmoduls für große Dateien oder eines Audio-/Videomoduls zur Übertragung von Audio- und Videodaten aufweist.

9. Verfahren nach einem der vorhergehenden Ansprüche,
**dadurch gekennzeichnet,**
**dass** Protokoll (a,b,c,d) und Anwendung (A1, A3) getrennte Module sind.

10. Verfahren nach einem der vorhergehenden Ansprüche,
**dadurch gekennzeichnet,**
**dass** das Gerät (2) eine Druckereimaschine ist.

## Claims

1. Method for the remote servicing of devices (2) including a computer (1) by means of a remote service computer (3) using at least one protocol (a, b, c, d) for exchanging data between the computer (1) and the remote service computer (3), wherein a protocol adaptation level (e) is provided to evaluate the protocol (a, b, c, d) for exchanging data between the computer (1) and the remote service computer (3) prior to a data transfer process in terms of the compatibility of the protocol (a, b, c, d) with the data transfer process,
**characterized in**
**that** if necessary, the protocol adaptation level (e) transmits the protocol to the computer (1) and installs it thereon.

2. Method according to Claim 1,
**characterized in**
**that** the protocol adaptation level (e) on the remote service computer (3) and/or on the computer (1) adapts the protocol (a, b, c, d).

3. Method according to Claim 1 or 2,
**characterized in**
**that** the default protocol (a, b, c, d) is the standard TCP/IP protocol (a).

4. Method according to any one of the preceding claims,
**characterized in**
**that** if required for the exchange of large amounts of data, a protocol (c) in accordance with the UDP standard is uploaded on the computer (1) of the device (2) by the remote service computer (3).

5. Method according to any one of the preceding claims,
**characterized in**
**that** the evaluation comprises a check for protocols (a, b, c, d) potentially present on the computer (1) of the device (2) and a suitable protocol (a, b, c, d) is selected out of these existing protocols (a, b, c, d) for a data transfer by the protocol adaptation level (e) on the remote service computer (3).

6. Method according to any one of the preceding claims,
**characterized in**
**that** if the protocol adaptation level (e) on the remote service computer (3) does not find a suitable protocol (a, b, c, d) on the computer (1) of the device (2), the remote service computer (3) transmits a suitable protocol to the computer (1) of the device (2) and uses it to transfer data.

7. Method according to any one of the preceding claims,
**characterized in**
**that** the protocol adaptation level (e) on the remote service computer (3) or on the computer (1) of the device (2) deletes one or more of the protocols (a, b, c, d) saved on the computer (1) of the device (2).

8. Method according to any one of the preceding claims,
**characterized in**
**that** the protocol (a, b, c, d) includes functions of a VPN transfer module, of a file transfer module for large files, or of an audio/video module for transferring audio and video data.

9. Method according to any one of the preceding claims,
**characterized in**
**that** the protocol (a, b, c, d) and the application (A1, A3) are separate modules.

10. Method according to any one of the preceding claims,
**characterized in**
**that** the device (2) is a print shop machine.

## Revendications

1. Procédé pour la téléassistance d'appareils (2) avec un ordinateur (1) au moyen d'un ordinateur de téléassistance (3), au moins un protocole (a, b, c, d) étant utilisé pour l'échange de données entre l'ordinateur (1) et l'ordinateur de téléassistance (3), un niveau d'adaptation de protocole (e) étant prévu, lequel vérifie l'aptitude du protocole (a, b, c, d) avant une opération de transfert de données entre l'ordinateur (1) et l'ordinateur de téléassistance (3),
**caractérisé en ce**
**que** si nécessaire le niveau d'adaptation de protocole (e) transmet le protocole à l'ordinateur (1) et l'y installe.

2. Procédé selon la revendication 1,
**caractérisé en ce**
**que** le niveau d'adaptation de protocole (e) adapte sur l'ordinateur de téléassistance (3) et/ou l'ordinateur (1), le protocole (a, b, c, d).

3. Procédé selon la revendication 1 ou 2,
**caractérisé en ce**
**que** le protocole (a, b, c, d) prévu en standard est le protocole standard (a) TCP/IP.

4. Procédé selon l'une des revendications précédentes,
**caractérisé en ce**
**qu'**en cas de besoin pour l'échange d'une grande quantité de données, un protocole (c) est chargé selon le standard UDP par l'ordinateur de téléassistance (3) sur l'ordinateur (1) de l'appareil (2).

5. Procédé selon l'une des revendications précédentes,
**caractérisé en ce**
**que** la requête comprend une vérification des protocoles (a, b, c, d) sur l'ordinateur (1) de l'appareil (2) et que parmi les protocoles existants (a, b, c, d), le protocole approprié (a, b, c, d) est sélectionné par le niveau d'adaptation de protocole (e) sur l'ordinateur de téléassistance (3) pour le transfert des données.

6. Procédé selon l'une des revendications précédentes,
**caractérisé en ce**
**que**, si aucun protocole adapté (a, b, c, d) n'est trouvé sur l'ordinateur (1) de l'appareil (2) par le niveau d'adaptation de protocole (6) sur l'ordinateur de téléassistance (3), l'ordinateur de téléassistance (3) transfère un protocole adapté sur l'ordinateur (1) de l'appareil (2) qui est utilisé pour le transfert des données.

7. Procédé selon l'une des revendications précédentes,
**caractérisé en ce**
**que** le niveau d'adaptation de protocole (e) supprime sur l'ordinateur de téléassistance (3) ou l'ordinateur (1) de l'appareil (2) un ou plusieurs protocole(s) (a, b, c, d) déposé(s) sur l'ordinateur (1) de l'appareil (2).

8. Procédé selon l'une des revendications précédentes,
**caractérisé en ce**
**que** le protocole (a, b, c, d) présente des fonctions d'un module de transmission VPN, d'un module de transmission de fichiers pour des fichiers importants ou d'un module audio/vidéo pour la transmission de données vidéo et audio.

9. Procédé selon l'une des revendications précédentes,
**caractérisé en ce**
**que** le protocole (a, b, c, d) et l'application (A1, A3) sont des modules séparés.

10. Procédé selon l'une des revendications précédentes,
**caractérisé en ce**
**que** l'appareil (2) est une machine d'imprimerie
